## Europäisches Patentamt
## European Patent Office
## Office européen des brevets

(19)

(11) Veröffentlichungsnummer: **0 203 298**
**B1**

(12) **EUROPÄISCHE PATENTSCHRIFT**

(45) Veröffentlichungstag der Patentschrift:
18.10.89

(51) Int. Cl.⁴: **A61C 13/225**

(21) Anmeldenummer: **86103869.3**

(22) Anmeldetag: **21.03.86**

(54) **Dentales Geschiebe.**

(30) Priorität: **03.04.85 DE 3512209**

(43) Veröffentlichungstag der Anmeldung:
**03.12.86 Patentblatt 86/49**

(45) Bekanntmachung des Hinweises auf die Patenterteilung:
**18.10.89 Patentblatt 89/42**

(84) Benannte Vertragsstaaten:
**AT BE CH DE FR GB IT LI LU NL SE**

(56) Entgegenhaltungen:
**WO-A-79/00847**
**DE-A- 3 339 084**
**DE-A- 3 414 796**
**US-A- 4 488 874**

**ZWR DAS DEUTSCHE ZAHNAERZTEBLATT, Band 91,
Nr. 12, Dezember 1982, Seite 70, DE**

(73) Patentinhaber: **Peter Dental Zahntechnisches Labor
GmbH, Siemensstrasse 14, D-7853 Steinen(DE)**

(72) Erfinder: **Heuser, Uwe, Bühlstrasse 58,
D-7850 Lörrach 7(DE)**

(74) Vertreter: **Rackette, Karl, Dipl.-Phys. Dr.-Ing,
Kaiser-Joseph-Strasse 179 Postfach 1310,
D-7800 Freiburg(DE)**

## Beschreibung

Die Erfindung betrifft ein dentales Geschiebe zum Befestigen von herausnehmbarem Zahnersatz am Restgebiß eines Patienten nach dem ersten Teil von Anspruch 1.

Derartige Geschiebe werden anlötbar, angußfähig oder aus einem rückstandfrei verbrennbaren Kunststoff hergestellt und sollen die auf Zahnprotesen wirkenden Kräfte aufnehmen. Bei einem von der Firma Microdent-Attachment GmbH vertriebenen Geschiebe, das als Anker-System bezeichnet wird und einen sogenannten ZL-Anker als Verankerungselement aufweist, soll im Rahmen der prothetischen Versorgung eine leichte Aktivierbarkeit und Austauschbarkeit des Verankerungselements geschaffen werden. Das bekannte Verankerungselement ist druckknopfartig ausgebildet und mit einem durchgehenden Kreuzschlitz versehen. Aus diesem Grunde können die vier Sektoren des Verankerungselements je nach Bedarf aufgeweitet werden, wodurch unterschiedliche Abzugskräfte der Prothese erreicht werden sollen.

Es hat sich jedoch gezeigt, daß einerseits im zugeordneten Augenkörper ein nicht reparabler Verschleiß auftritt und andererseits die Sektoren des bekannten druckknopfartigen Verankerungselementes nur eine geringe Elastizität haben, weshalb die tatsächlich auftretenden Haltekräfte nur schwer vorherbestimmbar und schwer reproduzierbar sind.

In der DE-A 3 414 796 ist ein dentales Geschiebe der eingangs erwähnten Gattung beschrieben, bei dem das Augenteil einen eingesetzten Klemmring aufweist, der mit dem Doppelkonus des im Sekundärteil eingeschraubten Verankerungsteils ein formschlüssiges Einrasten gestattet. Durch den Doppelkonus erstrecken sich in Längsrichtung mehrere Schlitze, die einen Kreuzschlitz bilden und dem Doppelkonus eine gewisse Elastizität verleihen. Durch Aufbiegen der zwischen den Schlitzen gebildeten Sektoren kann die Haltekraft des Geschiebes grob verändert werden, wobei jedoch Ermüdungserscheinungen des Materials sowie das Abbrechen einzelner Sektoren bei einer Überbeanspruchung unangenehme Grenzen setzen.

Ausgehend von diesem Stand der Technik liegt der Erfindung die Aufgabe zugrunde, ein Geschiebe zu schaffen, das bei der zahnprothetischen Versorgung vielseitig einsetzbar ist und indizierte Haltekräfte genau einzuhalten gestattet.

Diese Aufgage wird erfindungsgemäß dadurch gelöst, daß das Augenteil in den Augenkörper einschraubbar ist und daß auf der vom Gewindeabschnitt wegweisenden Stirnseite des Doppelkonus eine in diesen hineinragende kegelförmige Ausnehmung vorgesehen ist.

Vorzugsweise besteht das Augenteil aus PVDF (Polyvinylidenfluorid). Durch das Einschrauben eines derartigen Augenteils werden Versprödungen vermieden wie sie auftreten, wenn Metallteile eingegossen werden. Außerdem kann bei einem nicht vermeidbaren Verschleiß das Augenteil leicht ausgewechselt werden.

Eine Retentionsverankerung erfolgt mit einem Verankerungselement, das ein Verankerungsteil in Gestalt eines Doppelkonus aufweist, wobei das Augenteil als Retentionsauge mit einer konischen Verengung ausgebildet ist, die einen Formschluß zwischen dem Doppelkonus und dem Retentionsauge gestattet. Um unterschiedliche Haltekräfte auf einfache Weise zu erreichen, ist in dem Koppelkonus eine kegelförmige Ausnehmung vorgesehen, deren Tiefe die Elastizität des Doppelkonus bestimmt.

Weitere zweckmäßige Ausgestalungen und Weiterbildungen der Erfindung sind in den Unteransprüchen gekennzeichnet.

Die Erfindung wird nachstehend anhand der in der Zeichnung dargestellten Ausführungsbeispiele näher beschrieben. Es zeigen:

Fig. 1 das Primärteil des erfindungsgemäßen Geschiebes in einer perspektivischen Ansicht,
Fig. 2. das Primärteil gemäß Fig. 1 im Längsschnitt,
Fig. 3 das Sekundärteil eines erfindungsgemäßen Geschiebes in einer perspektivischen Ansicht,
Fig. 4 das Sekundärteil im Längsschnitt,
Fig. 5 einen in das Sekundärteil einschraubbaren Retentionskörper in perspektivischer Ansicht,
Fig. 6 den Retentionskörper im Längsschnitt,
Fig. 7 ein in das Primärteil einschraubbares Retentionsauge in einer perspektivischen Ansicht und
Fig. 8 das Retentionsauge im Längsschnitt.

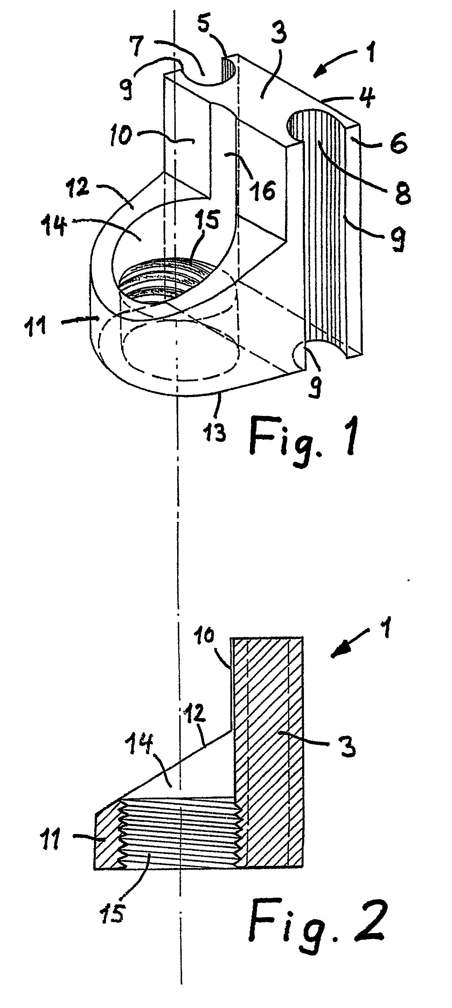

Das in den Figuren 1 bis 4 dargestellte Geschiebe dient zum lösbaren Befestigen von Zahnprothesen an überkronten Zähnen im Mund eines Patienten. Zur Herstellung des Geschiebes werden die dem Fachmann bekannten Anlöttechniken oder Verfahren der Wachsmodelation unter Einsatz von Einbettmassen und Gußformen angewendet. Anlötbare Geschiebeteile bestehen aus den in der Dentaltechnik üblichen Legierungen. Wenn die Geschiebeteile individuell durch Gießen hergestellt werden, geht man von Kunststoffkörpern aus, die die aus den Figuren 1 bis 4 erkennbare Form aufweisen. Die Kunststoffkörper bestehen dabei aus rückstandslos verbrennbarem Kunststoff, weshalb in der Einbettmasse in an sich bekannter Weise Negativformen gebildet werden, die durch Ausgießen das Herstellen von Geschiebeteilen gestatten, welche eine Form aufweisen, die mit der Form der Kunststoffkörper bzw. mit den in den Figuren 1 bis 4 dargestellten Formen übereinstimmen.

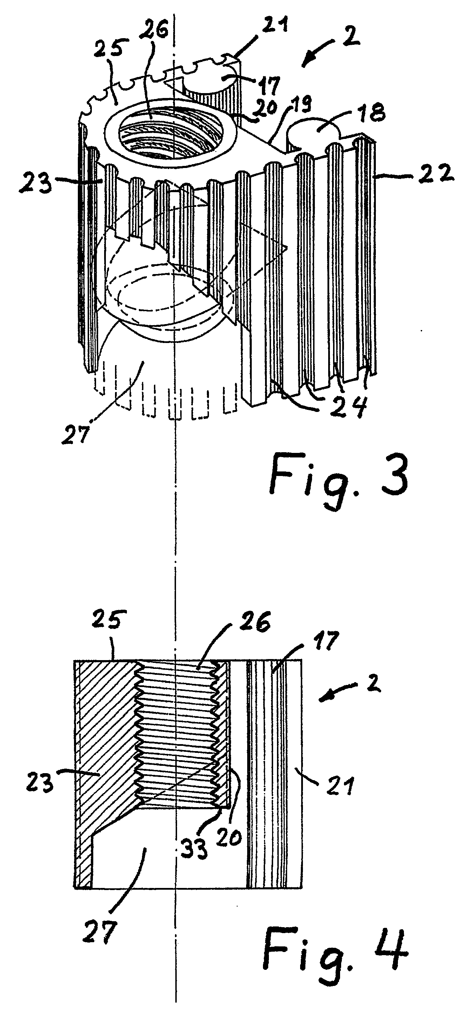

Während in den Figuren 1 und 2 das Primärteil 1 eines dentalen Geschiebes dargestellt ist, zeigen die Figuren 3 und 4 ein zum Primärteil 1 passendes Sekundärteil 2. Das Primärteil 1 weist einen Führungskörper 3 auf, der im wesentlichen die Gestalt einer verhältnismäßig dicken rechteckigen Platte aufweist. Die in Fig. 1 nach hinten weisende Rückseite stellt die Approximalfläche 4 zur Verbindung mit dem in der Zeichnung nicht dargestellten Kronengerüst einer Zahnkrone dar, die im Mund des Patienten auf einem präparierten Zahnstumpf dauerhaft befestigt wird.

Wie man in Fig. 1 erkennt, sind im Führungskörper 3 an den Seitenflächen 5, 6 zylindrische Führungsnuten 7, 8 vorgesehen, die einen Querschnitt in Gestalt eines Kreisabschnittes haben, dessen Bogen größer als der halbe Kreisumfang ist. Aus diesem Grunde können die Führungsnuten 7, 8 leicht mit einem Fräser nachbearbeitet werden, da diese infolge der eingebogenen Lippen 9 eine gute Zentrierung des Fräsers ermöglichen.

Auf der Vorderfläche 10 des Führungskörpers 3 ist ein Augenkörper 11 angeformt, der dem Primärteil 1 im unteren Bereich einen im wesentlichen U-förmigen Querschnitt verleiht. Wie man in Fig. 1 leicht erkennt, ist die mittlere Höhe des Augenkörpers 11 etwa halb so hoch wie die in Längsrichtung der Führungsnuten 7, 8 gemessene Höhe des Führungskörpers 3. Der Augenkörper 11 besitzt eine abgeschrägte Oberseite 12, so daß die Höhe des Augenkörpers 11 in Richtung auf die Vorderfläche 10 des Führungskörpers 3 kontinuierlich zunimmt. Aus diesem Grunde kann in der in Fig. 1 nach unten weisenden gingivalen Seite 13 des Augenkörpers 11 je nach Bedarf eine individuelle Papillenaussparung eingeschliffen werden, weil durch die abgeschrägte Oberseite 12 auf der Oberseite des Augenkörpers 11 eine Papillenverstärkung gebildet ist.

Wie man in der Zeichnung erkennt, weist der im Querschnitt im wesentlichen U-förmige Augenkörper 11 eine zylindrische Bohrung 14 auf, in der ein Innengewinde 15 eingeformt ist. Die zylindrische Bohrung 14 reicht infolge ihres Durchmessers bis in den Führungskörper 3 hinein und bildet daher auf dessen Vorderfläche 10 eine Führungsrinne 16.

In Fig. 2 ist das am Kronengerüst festsitzende Primärteil 1 im Längsschnitt dargestellt und man erkennt deutlich die abgeschrägte Oberseite 12 und das in der zylindrischen Bohrung 14 eingeformte Innengewinde 15.

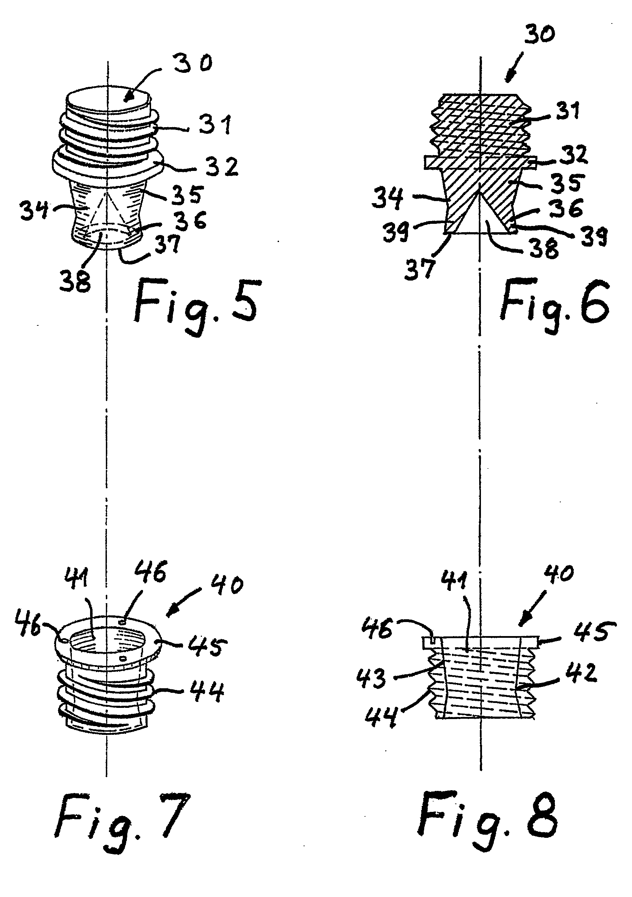

Das Innengewinde 15 dient zur Aufnahme eines in den Figuren 7 und 8 dargestellten Augenteils, welches weiter unten beschrieben ist.

Dem in den Figuren 1 und 2 dargestellten Primärteil 1 ist das Sekundärteil 2 zugeordnet, das von oben in Richtung der Führungsnuten 7, 8 auf das Primärteil 1 so weit aufgeschoben werden kann, bis das gesamte Primärteil 1 vom Sekundärteil 2 umfaßt wird. Beim Aufschieben des Sekundärteils 2 auf das Primärteil 1 wird das Sekundärteil 2 mit Führungswülsten 17, 18 in den Führungsnuten 7, 8 geführt. Eine weitere Führung ergibt sich an der Vorderfläche 10 und der Führungsrinne 16, die mit einer Rückenfläche 19 und einer Wölbung 20 zusammenwirken. Der Raum im Bereich der Führungswülste 17, 18 und der Rückenfläche 19 sowie der Wölbung 20 ist seitlich durch Flügelteile 21 und 22 verschlossen, auf denen die Führungswülste 17, 18 angeformt sind.

Die Flügelteile 21, 22 gehen in einen Gewindekörper 23 über, dessen äußerer Mantel U-förmig verläuft und ebenso wie die Flügelteile 21, 22 mit Retentionsrillen 24 versehen ist.

Der Gewindekörper 23 weist zwei Hohlräume auf. Einerseits erstreckt sich ausgehend von der okklusalen Seite 25 des Gewindekörpers 23 ein nach oben hin offenes durchgehendes Innengewinde 26. Andererseits ist im unteren Teil des Gewindekörpers 23 eine Augenkörperaussparung 27 vorgesehen, die in Fig. 3 teilweise gestrichelt dargestellt ist und den sich aus Fig. 4 ergebenden Querschnitt hat, wobei die Augenkörperaussparung 27 nach hinten in Richtung auf die Führungswülste 17, 18 offen ist, wie sich ebenfalls aus Fig. 4 ergibt.

Da das Sekundärteil 2 komplementär zum Primärteil 1 ausgebildet ist, kann es über dieses gestülpt werden und dabei das gesamte Primärteil 1 zur Gewährleistung einer guten Führung und Übertragung von Kräften umfassen.

Das im Gewindekörper 23 vorgesehene Innengewinde 26 dient zum Einschrauben von Verankerungselementen, wie sie in den Figuren 5 und 6 dargestellt sind.

Das in den Figuren 5 und 6 dargestellte Verankerungselement, das nachfolgend Retentionskörper 30 genannt ist, verfügt über einen Gewindeabschnitt 31, so daß der Retentionskörper 30 in das Innengewinde 26 des Sekundärteils 2 auswechselbar eingeschraubt werden kann. Wie man in Fig. 5 erkennt, ist das Gewinde des Gewindeabschnitts 31 ohne Freistich gefertigt. Unterhalb des Gewindeabschnitts 31 befindet sich ein Anschlagflansch 32, der beim Einschrauben des Retentionskörpers 30 in das Innengewinde 26 gegen die in Fig. 4 am besten sichtbare Anschlagfläche 33 des Innengewindes 26 zur Anlage kommt. Um das Einschrauben und Ausschrauben des Retentionskörpers 30 zu erleichtern, sind auf der vom Gewindeabschnitt 31 wegweisenden Seite des Anschlagflansches 32 Einschraubhilfen in Form von Kerben oder sonstigen Vertiefungen vorgesehen.

Auf der Unterseite des Anschlagflansches 32 ist ein Verankerungsteil in Gestalt eines Doppelkonus 34 angeformt. Der Doppelkonus 34 verfügt über einen sich konisch verjüngenden Abschnitt 35 und einen sich daran anschließenden konisch erweiternden Abschnitt 36. Auf der von dem Gewindeabschnitt 31 wegweisenden Stirnseite 37 des Doppelkonus 34 ist eine kegelförmige Ausnehmung 38 vorgesehen, die in Fig. 5 gestrichelt und in Fig. 6 im Schnitt dargestellt ist. Vorzugsweise hat die kegelförmige Ausnehmung 38 den gleichen Scheitelwinkel wie der sich konisch erweiternde Abschnitt 36, so daß der durch die kegelförmige Ausnehmung 38 im kegelförmig erweiterten Abschnitt 36 gebildete Konusring 39 im Bereich des kegelförmig erweiterten Abschnitts 36 eine konstante Wandstärke aufweist. Bei dem in Fig. 6 dargestellten Ausführungsbeispiel nimmt die Wandstärke des Konusring 39 in Richtung auf die Stirnseite 37 ab. Durch Verändern der Eindringtiefe der kegelförmigen Ausnehmung 38 in den Doppelkonus 34 läßt sich auf einfache Weise die Steifigkeit des Doppelkonus 34 verändern. Auf diese Weise ist es möglich, die Haltekraft des Retentionskörpers 30 in einem Retentionsauge entsprechend den jeweiligen Bedürfnissen einzustellen. Zur leichteren Handhabung der verschiedenen Retentionskörper mit unterschiedlich tiefen kegelförmigen Ausnehmungen 38 können diese verschiedenfarbig hergestellt sein.

Das in den Figuren 7 und 8 dargestellte Retentionsauge 40 ist beim endgültig zusammengebauten Geschiebe in das Innengewinde 15 des Primärteils 1 eingeschraubt und kann dort im Falle eines Verschleißes leicht ausgewechselt werden. Beim Überschieben des Sekundärteils 2 über das Primärteil 1 greift der Doppelkonus 34 des im Sekundärteil 2 auswechselbar verschraubten Retentionskörpers 30 in einen Kanal 41 mit einer konischen Verengung 42 ein. Die konische Verengung 42 hat einen Fügewinkel, der der Form des sich konisch verjüngenden Abschnitts 35 des Retentionskörpers 30 angepaßt ist.

Entsprechend ist der Haltewinkel der konischen Verjüngung 42 dem Winkel und dem Durchmesser des sich kegelförmig erweiternden Abschnitts 36 angepaßt. Im eingerasteten Zustand berührt somit die Innenwandung 43 des Kanals 41 die Außenwandung des Doppelkonus 34 formschlüssig.

Wie man in den Figuren 7 und 8 weiterhin erkennt, verfügt das Retentionsauge 40 über ein Außengewinde 44 sowie einen Anschlagflansch 45 mit Einschraubhilfen 46.

## Patentansprüche

1. Dentales Geschiebe zum Befestigen von herausnehmbarem Zahnersatz am Restgebiß eines Patienten mit einem Augenkörper (11) und ein in diesem angeordnetes Augenteil (40) aufweisenden Primärteil (1), das am Kronengerüst einer Zahnkrone befestigbar ist, sowie mit einem in den herausnehmbaren Zahnersatz eingearbeiteten Sekundärteil (2), in welchem ein einen Gewindeabschnitt (31) aufweisendes Verankerungselement (30) auswechselbar verschraubt ist, das mit seinem einen Doppelkonus (34) aufweisenden Verankerungsteil, der ausgehend vom Gewindeabschnitt (31) einen sich konisch verjüngenden Abschnitt (35) und daran anschließend einen sich konisch erweiternden Abschnitt (36) aufweist, in das Augenteil (40) zur lösbaren Befestigung des Zahnersatzes einsetzbar ist, dadurch gekennzeichnet, daß das Augenteil (40) in den Augenkörper (11) einschraubbar ist und daß auf der vom Gewindeabschnitt (31) wegweisenden Stirnseite (37) des Doppelkonus (34) eine in diesen hineinragende kegelförmige Ausnehmung (38) vorgesehen ist.

2. Geschiebe nach Anspruch 1, dadurch gekennzeichnet, daß der Innenmantel der kegelförmigen Ausnehmung (38) parallel zum Außenmantel des stirnsseitigen sich konisch erweiternden Abschnitts (36) des Doppelkonus (34) verläuft.

3. Geschiebe nach Anspruch 1 oder 2, dadurch gekennzeichnet, daß das Verankerungselement (30) und das Augenteil (40) aus einem Kunststoff wie PVDF hergestellt sind.

4. Geschiebe nach einem der vorstehenden Ansprüche, dadurch gekennzeichnet, daß in dem dem Verankerungselement (30) zugeordneten Retentionsauge (40) ein Kanal (41) mit einer konischen Verengung (42) vorgesehen ist, gegen die der Doppelkonus (34) im eingerasteten Zustand formschlüssig anliegt.

5. Geschiebe nach einem der Ansprüche 1 bis 4, dadurch gekennzeichnet, daß der Gewindeabschnitt (31) am zum Verankerungsteil (34) weisenden Ende einen Anschlagflansch (32) aufweist.

6. Geschiebe nach einem der vorstehenden Ansprüche, dadurch gekennzeichnet, daß der Augenkörper (11) auf der von der Approximalfläche (4) wegweisenden Seite an einem Führungskörper (3) angeformt ist, der an beiden Seitenflächen (5, 6) mit seitlich offenen zylindrischen Führungsnuten (7, 8) versehen ist.

7. Geschiebe nach einem der vorstehenden Ansprüche, dadurch gekennzeichnet, daß der Augenkörper (11) eine Papillenverstärkung infolge einer abgeschrägten Oberseite (12) aufweist.

8. Geschiebe nach Anspruch 6 oder 7, dadurch gekennzeichnet, daß die Öffnung des Augenkörpers (11) als zylindrische Bohrung (14) mit einem Innengewinde (15) ausgebildet ist, wobei die Öffnung (14) in eine auf der Vorderfläche (10) des Führungskörpers (3) ausgebildete Führungsrinne (16) übergeht.

9. Geschiebe nach einem der Ansprüche 6 bis 7, dadurch gekennzeichnet, daß dem Primärteil (1) ein Sekundärteil (2) zugeordnet ist, dessen den Gewindeabschnitt (31) aufnehmender Gewindekörper (23) mit seitlichen parallel zueinander verlaufenden Flügelteilen (21, 22) versehen ist, die auf ihren aufeinander zuweisenden Innenflächen jeweils mit einer Führungswulst (17, 18) zum Einschieben in die zugeordnete Führungsnut (7, 8) am Primärteil (1) versehen sind.

10. Geschiebe nach Anspruch 9, dadurch gekennzeichnet, daß die Führungswulst (17, 18) und die Führungsnuten (7, 8) einen Querschnitt in Gestalt eines Kreisabschnittes haben, dessen Bogen größer als der halbe Kreisumfang ist.

11. Geschiebe nach Anspruch 9 oder 10, dadurch gekennzeichnet, daß im Gewindekörper (23) eine Augenkörperaussparung (27) vorgesehen ist, in die der Augenkörper (11) versenkt ist, wenn das Sekundärteil (2) mit dem Verankerungselement (30) in das im Augenkörper (11) angeordnete Augenteil (40) eingreift.

12. Geschiebe nach einem der Ansprüche 9 bis 11, dadurch gekennzeichnet, daß der Gewindekörper (25) ein bis. zur okklusalen Seite des Sekundärteils (2) durchgehendes Innengewinde (26) aufweist.

13. Geschiebe nach einem der Ansprüche 9 bis 12, dadurch gekennzeichnet, daß auf dem Außenmantel des Sekundärteils (2) und den nach außen weisenden Seiten der Flügelteile (21, 22) Retentionsrillen (24) vorgesehen sind.

## Claims

1. A dental fitment for fixing a removable set of dentures to the remaining teeth of a patient, comprising a primary portion (1) which has a lug body (11) and a lug portion (40) arranged therein, which primary portion can be fixed to the crown structure of a tooth crown, and comprising a secondary portion (2) which is incorporated into the removable set of dentures and in which an anchoring element (30) having a screwthread portion (31) is interchangeably screwed, wherein the anchoring element (30) with its anchoring portion which has a double cone (34) and which, starting from the screwthread portion (31) comprises a conically tapering portion (35) and adjoining same a conically enlarging portion (36), can be fitted into the lug portion (40) for releasably fixing the set of dentures, characterised in that the lug portion (40) can be screwed into the lug body (11) and that provided on the end face (37) of the double cone (34), which faces away from the screwthread portion (31), is a conical recess (38) which projects into the double cone.

2. A fitment according to claim 1 characterised in that the inside peripheral surface of the conical recess (38) extends parallel to the outside peripheral surface of the end, conically enlarging portion (36) of the double cone (34).

3. A fitment according to claim 1 or claim 2 characterised in that the anchoring element (30) and the lug portion (40) are made from a plastics material such as PVDF.

4. A fitment according to one of the preceding claims characterised in that provided in the retaining lug (40) associated with the anchoring element (30) is a passage (41) with a conical constriction (42) against which the double cone (34) positively bears in the engaged condition.

5. A fitment according to one of claims 1 to 4 characterised in that the screwthread portion (31) has an abutment flange (32) at the end which faces towards the anchoring portion (34).

6. A fitment according to one of the preceding claims characterised in that on the side facing away from the approximal surface (4) the lug body (11) is formed on a guide body (3) which is provided at both side surfaces (5, 6) with laterally open, cylindrical guide grooves (7, 8).

7. A fitment according to one of the preceding claims characterised in that the lug body (11) has a papillary reinforcement as a result of an inclined top side (12).

8. A fitment according to claim 6 or claim 7 characterised in that the opening of the lug body (11) is in the form of a cylindrical bore (14) with an internal screwthread (15), wherein the opening (14) goes into a guide channel (16) on the front face (10) of the guide body (3).

9. A fitment according to one of claims 6 and 7 characterised in that associated with the primary portion (1) is a secondary portion (2) in which the screwthread body (23) which receives the screwthread portion (31) is provided with lateral, mutually parallel flank portions (21, 22) which on their mutually facing inside surfaces are each provided with a guide bead (17, 18) for insertion into the associated guide groove (7, 8) on the primary portion (1).

10. A fitment according to claim 9 characterised in that the guide beads (17, 18) and the guide grooves (7, 8) are of a cross-section in the form of a portion of a circle, the arc of which is greater than half the periphery of a circle.

11. A fitment according to claim 9 or claim 10 characterised in that provided in the screwthread body (23) is a lug body recess (27) into which the lug body (11) is sunk when the secondary portion (2) engages with the anchoring element (30) into the lug portion (40) disposed in the lug body (11).

12. A fitment according to one of claims 9 to 11 characterised in that the screwthread body (25) has an internal screwthread (26) which extends therethrough to the occlusal side of the secondary portion (2).

13. A fitment according to one of claims 9 to 12 characterised in that retaining grooves (24) are provided on the outside peripheral surface of the secondary portion (2) and the outwardly facing sides of the flank portions (21, 22).

**Revendications**

1. Dispositif dentaire coulissant pour la fixation d'une prothèse dentaire détachable sur la dentition restante d'un patient avec une partie primaire (1) comportant un corps à œil (11) et une pièce d'œil (40) disposée dans celui-ci, ladite partie primaire pouvant être fixée au corps de couronne d'une couronne dentaire, ainsi qu'avec une partie secondaire (2) incorporée dans la prothèse dentaire détachable, partie dans laquelle est vissé, échangeable, un élément d'ancrage (30) présentant une section filetée (31), qui peut être disposé dans la pièce d'œil (40) pour la fixation amovible de la prothèse dentaire avec sa pièce d'ancrage présentant un bicône (34), la pièce d'ancrage présentant à partir de la section filetée (31) une section (35) qui se rétrécit en cône et reliée à celle-ci une section (36) en cône qui s'élargit, caractérisé en ce que la pièce d'œil (40) peut être vissée dans le corps à œil (11) et que sur la face frontale (37) du bicône (34) opposée à la section filetée (31) est prévu un évidement (38) en forme de cône ménagé à l'intérieur dudit bicône.

2. Dispositif selon la revendication 1, caractérisé en ce que la paroi interne de l'évidement en forme de cône (38) s'étend parallèlement à la paroi externe de la section frontale (36) du bicône s'élargissant en forme de cône.

3. Dispositif selon la revendication 1 ou la revendication 2, caractérisé en ce que l'élément d'ancrage (30) et la pièce à œil (40) sont réalisés en matériau synthétique tel que le PVDF.

4. Dispositif selon l'une quelconque des revendications précédentes, caractérisé en ce que dans l'œil de rétention (40) adapté à l'élément d'ancrage (40) est prévu un canal (41) avec un rétrécissement conique (42) contre lequel le bicône (34) vient en contact direct en position encliquetée.

5. Dispositif selon l'une des revendications 1 à 4, caractérisé en ce que la section filetée (31), présente à l'extrémité disposée vers la pièce d'ancrage (34) une collerette d'appui (32).

6. Dispositif selon l'une quelconque des revendications précédentes, caractérisé en ce que le corps d'œil (1) sur son côté disposé vers la surface proximale (4), est formé sur un corps de guidage (3), qui est muni sur ses deux surfaces latérales (5, 6) de rainures de guidage (7, 8) cylindriques ouvertes latéralement.

7. Dispositif selon l'une quelconque des revendications 1 à 5, caractérisé en ce que le corps d'œil (11) présente un renforcement en raison d'une surface (12) biseautée.

8. Dispositif selon l'une des revendications 6 ou 7, caractérisé en ce que l'ouverture du corps d'œil (11) est conformée en alésage cylindrique (14) avec un filetage intérieur (15), l'ouverture (14) se prolongeant dans une rainure de guidage (16) ménagée dans la surface frontale (10) du corps de guidage (3).

9. Dispositif selon l'une des revendications 6 à 7, caractérisé en ce que à la partie primaire (1) est associée une partie secondaire (2), dont le corps fileté (23) recevant la section filetée (31) est muni d'ailes (21, 22) s'étendant latéralement parallèlement entre elles, qui sont munies à chaque fois sur leurs surfaces intérieures se faisant face l'une à l'autre d'une nervure de guidage (17, 18) pour le coulissement dans la rainure de guidage correspondante (7, 8) de la partie primaire (1).

10. Dispositif selon la revendication 9, caractérisé en ce que les nervures de guidage (17, 18) et les rainures de guidage (7, 8) ont une section en forme d'arc de cercle, dont l'arc est supérieur à un demicercle.

11. Dispositif selon la revendication 9 ou 10, caractérisé en ce que dans le corps fileté (23) est prévu un évidement (27) de corps d'œil, dans lequel s'enfonce le corps d'œil (11), lorsque la pièce secondaire (2) avec l'élément d'ancrage (30) vient en prise dans la pièce d'œil (40) disposée dans le corps d'œil (11).

12. Dispositif selon l'une des revendications 9 à 11, caractérisé en ce que le corps fileté (25) comporte un filetage intérieur (26) traversant jusqu'à la face occlusale de la pièce secondaire (2).

13. Dispositif selon l'une des revendications 9 à 12, caractérisé en ce que sur la surface extérieure de la pièce secondaire (2) sur les faces dirigées vers l'extérieur des ailes (21, 22) sont ménagées des stries de rétention (24).

Fig. 1

Fig. 2

Fig. 3

Fig. 4

Fig. 5

Fig. 6

Fig. 7

Fig. 8